# EUROPEAN PATENT APPLICATION

(11) **EP 4 407 748 A1**
(43) Date of publication of application: **31.07.2024**
(21) Application number: 22879939.1
(22) Date of filing: 28.07.2022
(51) Int. Cl.: H01M 10/54

(54) **METHOD FOR SYNTHESIZING HIGH-SAFETY POSITIVE ELECTRODE MATERIAL BY RECYCLING POSITIVE ELECTRODE LEFTOVER MATERIALS, AND APPLICATION**

(30) Priority: 12.10.2021 CN 202111186036
(71) Applicant: Guangdong Brunp Recycling Technology Co., Ltd., Foshan, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: YU, Haijun, Foshan, Guangdong 528137 (CN); CHEN, Jiangdong, Foshan, Guangdong 528137 (CN); XIE, Yinghao, Foshan, Guangdong 528137 (CN); XU, Jialei, Foshan, Guangdong 528137 (CN); WU, Benben, Foshan, Guangdong 528137 (CN); ZHANG, Congguang, Foshan, Guangdong 528137 (CN)
(74) Representative: Primiceri, Maria Vittoria
(86) International application number: PCT/CN2022/108665
(87) International publication number: WO 2023/060992

(57) **Abstract**

Disclosed in the present invention are a method for synthesizing a high-safety positive electrode material by recycling positive electrode leftover materials, and an application. The method comprises: adding an acid and a reducing agent into positive electrode leftover materials for dissolving, carrying out solid-liquid separation to obtain a first filtrate, adding an alkali into the first filtrate to adjust the pH value for reaction for a period of time, so that most of aluminum ions are precipitated, carrying out solid-liquid separation to obtain a second filtrate, carrying out precipitation reaction on the second filtrate to obtain a precursor, mixing the precursor, a lithium salt and a fluorine source, and calcining in an oxygen atmosphere to obtain a high-safety positive electrode material, wherein the fluorine source is PVDF. According to the present invention, a high-performance and high-safety Al and F co-doped positive electrode material is synthesized by recycling waste positive electrode leftover materials; by means of the synergistic effect of A1 and F, the structural stability of the material at a high temperature is improved, structural damage caused by reaction between the positive electrode and the electrolyte at a high temperature is effectively inhibited, the safety is improved, cation mixing is reduced, ion migration kinetics of lithium ion deintercalation and intercalation are enhanced, and excellent electrochemical performance is achieved.

## Description

### TECHNICAL FIELD

The present disclosure belongs to the technical field of batteries, and in particular relates to a method for synthesizing a high-safety cathode material by recycling cathode leftover materials, and use of the high-safety cathode material.

### BACKGROUND

At present, lithium-ion batteries (LIBs) have become the mainstream products among current secondary batteries, which are widely used in portable electronic devices such as smart phones and notebook computers. In addition, LIBs promote the industrial upgrading and transformation in fields such as new energy vehicles and large-scale energy storage, and show potential advantages in various applications such as stationary energy storage, hybrid electric vehicles, and electric vehicles. At present, the most widely used cathode materials in LIBs include: layered lithium cobalt oxide (LCO) (LiCoO₂) and lithium nickel cobalt manganese oxide (LNCMO) (LiCoₓNi_{y}Mn_{z}O₂), spinel lithium manganese oxide (LMO) (LiMn₂O₄), and lithium iron phosphate (LFP) (LiFePO₄). However, the safety of a cathode material for traction batteries is particularly important. Therefore, it is committed to developing cathode materials with high energy density, high power density, environmental friendliness, low price, and high safety performance.

At present, the commonly used cathode materials have low electron and ion conductivity, rapid decay of electrode capacity, poor structural stability and rate performance, and poor safety of material. Therefore, it is necessary to find an effective method to improve the electrochemical performance and safety of cathode materials. In the outer space of the 21st century, it is impossible for a spacecraft to face the sun all the time. When the spacecraft is on the dark side, solar cells cannot work normally, and energy storage batteries are required to supply power. Although having a high energy density, the current LIBs cannot be used in the aerospace field due to low safety performance. Therefore, LIBs used in the aerospace field must have high safety, super long cycling life, high energy density, small size, and the like. Batteries used in the aerospace field should have both high safety and high electrochemical performance for space exploration.

According to the current research status of waste LIB recycling, the current process route of waste LIB recycling is to refine and recover metal elements in a cathode material and recycle graphite in an anode material separately, which is complicated and leads to low recovery rates.

### SUMMARY

The present disclosure is intended to solve at least one of the technical problems existing in the prior art. In view of this, the present disclosure provides a method for synthesizing a high-safety cathode material by recycling cathode leftover materials, and use of the high-safety cathode material. By the method, the one-step synthesis of a required cathode material from a waste material can be achieved, which can optimize the recovery rate and reduce the cost.

According to one aspect of the present disclosure, a method for synthesizing a high-safety cathode material by recycling cathode leftover materials is provided, including the following steps:
S1: dissolving the cathode leftover materials with an acid and a reducing agent, and conducting solid-liquid separation (SLS) to obtain a first filtrate;
S2: adjusting a pH of the first filtrate with an alkali to allow a reaction for a specified time to precipitate most of aluminum ions, and conducting SLS to obtain a second filtrate;
S3: subjecting the second filtrate to a precipitation reaction to obtain a precursor; and
S4: mixing the precursor, a lithium salt, and a fluorine source, and subjecting a resulting mixture to calcination in an oxygen atmosphere to obtain the high-safety cathode material, wherein the fluorine source is polyvinylidene difluoride (PVDF). In the case where a binder of the cathode leftover materials is PVDF, the fluorine source may be a solid phase obtained from the SLS in step S1.

It should be noted that, in addition to PVDF, the solid phase obtained from the SLS in step S 1 should include acetylene black (a conductive agent), but the acetylene black (C) can be converted into a CO₂ gas during the high-temperature calcination in a pure oxygen atmosphere in step S4, and thus the acetylene black will not affect the material.

In some embodiments of the present disclosure, the cathode leftover materials may be one selected from the group consisting of waste LIB cathode leftover materials, waste sodium-ion battery (NIB) cathode leftover materials, and lithium polymer battery (LPB) cathode leftover materials, and may preferably be waste LIB cathode leftover materials.

In some embodiments of the present disclosure, the waste LIB cathode leftover materials may be one selected from the group consisting of waste nickel-cobalt-manganese ternary cathode leftover materials, waste lithium iron phosphate (LFP) leftover materials, waste lithium cobalt oxide (LCO) leftover materials, and waste lithium manganese oxide (LMO) leftover materials, and may preferably be waste nickel-cobalt-manganese ternary cathode leftover materials.

In some embodiments of the present disclosure, the waste nickel-cobalt-manganese ternary cathode leftover materials may be one selected from the group consisting of NCM811, NCM523, NCM622, and NCM334, and may preferably be NCM811.

In some embodiments of the present disclosure, in step S1, the acid may be one or more selected from the group consisting of hydrochloric acid, sulfuric acid, and citric acid, and may preferably be sulfuric acid.

In some embodiments of the present disclosure, in step S1, the reducing agent may be one selected from the group consisting of glucose, hydrogen peroxide, and formic acid, and may preferably be hydrogen peroxide.

In some embodiments of the present disclosure, in step S2, a molar ratio of the aluminum ions to other transition metal ions in the second filtrate may be (0.01-0.03): (1-1.05). An amount of the aluminum ions remained in the filtrate can be controlled by adjusting the pH and time for the precipitation.

In some embodiments of the present disclosure, in step S2, the alkali may be one selected from the group consisting of potassium hydroxide, sodium hydroxide, and lithium hydroxide, and may preferably be sodium hydroxide.

In some embodiments of the present disclosure, in step S2, the pH may be adjusted to 3.0 to 6.0 and preferably to 4.5.

In some embodiments of the present disclosure, when the waste LIB cathode leftover materials are waste nickel-cobalt-manganese ternary cathode leftover materials, a specific process of the precipitation reaction in step S3 may be as follows: mixing an alkali and a complexing agent, and adding the second filtrate dropwise to a resulting mixture to allow a reaction for a specified time at a controlled pH and a controlled temperature; stopping to feed, conducting aging, and conducting SLS to obtain a precipitate; and washing and drying the precipitate to obtain the precursor. The alkali may be one or more selected from the group consisting of potassium hydroxide, sodium hydroxide, and lithium hydroxide, and may preferably be sodium hydroxide; optionally, the reaction may be conducted at 30 °C to 70 °C and preferably 50 °C; optionally, the reaction may be conducted for 12 h to 24 h and preferably 20 h; optionally, the pH may be 10 to 12 and preferably 11; optionally, the washing may be conducted sequentially with distilled water and an ethanol solution, and the ethanol solution may have a concentration preferably of 30% to 99.5%; optionally, the drying may refer to vacuum drying at 50 °C to 70 °C for 6 h to 18 h and preferably vacuum drying at 60 °C for 12 h; and optionally, the aging may be conducted for 12 h to 48 h.

In some embodiments of the present disclosure, when the waste LIB cathode leftover materials are waste LFP leftover materials, a specific process of the precipitation reaction in step S3 may be as follows: adding the second filtrate to a reactor, controlling a temperature in the reactor to allow a reaction for a specified time, and conducting aging with the temperature and stirring rate unchanged; and separating a resulting product in the reactor to obtain a solid, and washing and drying the solid to obtain the precursor. Preferably, the temperature may be 170 °C to 190 °C, the reaction may be conducted for 10 h to 13 h, and the aging may be conducted for 12 h to 48 h; and more preferably, the aging may be conducted for 24 h.

In some embodiments of the present disclosure, the complexing agent may be one selected from the group consisting of ammonium hydroxide and urea, and may preferably be ammonium hydroxide.

In some embodiments of the present disclosure, in step S4, the lithium salt may be one or more selected from the group consisting of lithium hydroxide, lithium carbonate, and lithium oxalate, and may preferably be lithium hydroxide.

In some embodiments of the present disclosure, in step S4, the precursor, the lithium salt, and the PVDF may have a molar ratio of (1-2): 1: (0.01-0.1) and preferably 1.05: 1: 0.04.

In some embodiments of the present disclosure, in step S4, the calcination may be conducted in two stages: a first-stage calcination and a second-stage calcination; the first-stage calcination may be conducted at 400 °C to 500 °C and the second-stage calcination may be conducted at 900 °C to 1,200 °C; a heating rate for the first-stage calcination and the second-stage calcination may be 2 °C/min to 7 °C/min; and preferably, the first-stage calcination may be conducted for 3 h to 5 h and the second-stage calcination may be conducted for 8 h to 24 h.

The present disclosure also provides use of a high-safety cathode material prepared by the method described above in an aerospace battery.

According to a preferred embodiment of the present disclosure, the present disclosure at least has the following beneficial effects.
1. In the present disclosure, a high-performance and high-safety cathode material co-doped with Al and F is synthesized by recycling waste cathode leftover materials. The synthesis method is easy to operate, involves mild reaction conditions, and is suitable for industrial production. The synergistic effect of Al and F reduces the phase transition of the material from lamellar form to spinel form and enhances an electron and ion conductivity. By doping with Al and F, F ions replace O ions, and an Al-F bond has a higher binding energy than covalent bonds of other metals with O, which stabilizes a crystal structure of the material, slows down the release of active oxygen at a high temperature, improves the structural stability of the material at a high temperature, effectively suppresses a structural damage caused by a reaction between a cathode and an electrolytic solution at a high temperature, increases the initial reaction temperature, and slows down the release of heat, thereby improving the safety. In addition, a cation disordering is reduced, an ion migration kinetics of lithium ion deintercalation and intercalation is enhanced, and the ion transmission rate is significantly increased. Therefore, the cathode material obtained in the present disclosure has excellent electrochemical performance.
2. The method provided by the present disclosure brings no pollution to the environment, and uses aluminum foil of waste cathode leftover materials as an Al source and a recovered binder PVDF as an F source, which can effectively achieve the recycling of industrial waste, reduce production costs, and optimize the recycling industry.

### BRIEF DESCRIPTION OF DRAWINGS

The present disclosure is further described below with reference to accompanying drawings and examples.
FIG. 1 shows the rate performance comparison of Examples 1, 2, and 3 with Comparative Example 1;
FIG. 2 shows the rate performance comparison of Examples 4 and 5 with Example 1;
FIG. 3 shows the 1 C cycling performance comparison of Example 1 with Comparative Example 1;
FIG. 4 shows the safety performance comparison of Examples 1, 2, and 3 with Comparative Example 1;
FIG. 5 shows the safety performance comparison of Example 1 with Comparative Examples 1 and 2;
FIG. 6 shows the safety performance comparison of Examples 1 and 6 with Comparative Example 3;
FIG. 7 is an energy-dispersive X-ray spectroscopy (EDS) spectrum of the NCM ternary cathode material co-doped with Al and F obtained in Example 1; and
FIG. 8 is a scanning electron microscopy (SEM) image of the NCM ternary cathode material co-doped with Al and F obtained in Example 1.

### DETAILED DESCRIPTION OF EMBODIMENTS

The concepts and technical effects of the present disclosure are clearly and completely described below in conjunction with examples, so as to allow the objectives, features and effects of the present disclosure to be fully understood. Apparently, the described examples are merely some rather than all of the examples of the present disclosure. All other examples obtained by those skilled in the art based on the examples of the present disclosure without creative efforts should fall within the protection scope of the present disclosure.

### Example 1

A method for synthesizing a cathode material co-doped with Al and F by recycling waste ternary leftover materials was provided in this example, and a specific process was as follows:
(1) 6 mol/L of a sulfuric acid solution and a hydrogen peroxide solution were added to completely dissolve the waste ternary leftover materials, and a resulting mixture was filtered to obtain a filter residue (including a binder PVDF and a conductive agent acetylene black) and a filtrate A; the filter residue was dried and collected; a pH of the filtrate A was adjusted to 4.5 by adding an appropriate amount of a NaOH solution, and a resulting solution was stirred for 2 h such that most of A1 ions were precipitated; and a resulting mixture was filtered to obtain a filtrate B and a filter residue (Al(OH)₃), and the filter residue would be recycled. In the filtrate B, aluminum ions and transition metal elements Ni, Co, and Mn had a molar ratio of 0.01: 0.79: 0.10: 0.11.
(2) A sodium hydroxide solution with a specified concentration was prepared and added as a precipitating agent to a reactor, then a pH in the reactor was controlled at 11 by adding a specified amount of ammonium hydroxide, and a temperature in the reactor was controlled at 55 °C; the filtrate B was added dropwise to the reactor by using a peristaltic pump with a feed rate of 500 µL/min to allow a reaction for 20 h; the feeding was stopped, and with the temperature, the pH, the stirring rate, and other parameters in the reactor unchanged, aging was conducted for 24 h; after the aging was completed, materials in the reactor were separated to obtain a solid and a liquid; Na₂CO₃ was added to the liquid to obtain Li₂CO₃, which was recycled; and the solid was washed repeatedly, and finally dried at 80 °C for 24 h to obtain a precursor.
(3) The precursor, lithium hydroxide monohydrate, and the filter residue collected in step (1) were mixed in a molar ratio of 1: 1.05: 0.03 and thoroughly ball-milled to be uniformly mixed to obtain a solid powder, and the solid powder was placed in a tube furnace; and the solid powder was heated to 450 °C at a heating rate of 5 °C/min and calcined at 450 °C for 4 h, and then heated to 900 °C at a heating rate of 5 °C/min and calcined at 900°C for 12 h in a pure oxygen atmosphere (50 sccm, namely, 50 mL/min), then cooled with furnace, and ground to finally obtain the NCM ternary cathode material co-doped with Al and F: LiNi_{0.8}Co_{0.1}Mn_{0.09}Al_{0.01}O_{1.94}F_{0.06}.

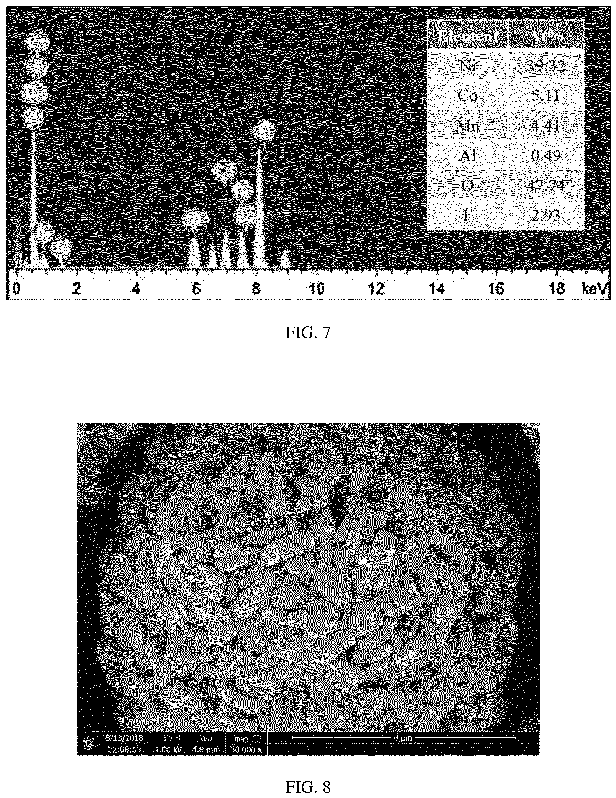

FIG. 7 is an EDS spectrum of the NCM ternary cathode material co-doped with Al and F obtained in this example. It can be seen that the material is doped with Al and F, and due to the calcination in a pure oxygen atmosphere, carbon is completely converted into a CO₂ gas, and thus there is no C in the material.

FIG. 8 is an SEM image of the NCM ternary cathode material co-doped with Al and F obtained in this example. It can be seen from the figure that the material presents as a spherical secondary particle with a diameter of about 4 µm composed of small primary nanoparticles, the spherical shape is formed from the close connection of a plurality of nanoparticles, and thus a porous structure with high porosity is observed, which is conducive to the deintercalation/intercalation reaction of Li⁺ and leads to prominent structural stability, thereby improving thermal stability.

### Example 2

A method for synthesizing a cathode material co-doped with Al and F by recycling waste ternary leftover materials was provided in this example, which was different from Example 1 in that, in step (3), the precursor, the lithium hydroxide monohydrate, and the filter residue collected in step (1) had a molar ratio of 1: 1.05: 0.01; and the solid powder was heated to 450 °C at a heating rate of 5 °C/min and calcined at 450 °C for 4 h, and then heated to 700 °C at a heating rate of 5 °C/min and calcined at 700 °C for 8 h.

### Example 3

A method for synthesizing a cathode material co-doped with Al and F by recycling waste ternary leftover materials was provided in this example, which was different from Example 1 in that, in step (3), the precursor, the lithium hydroxide monohydrate, and the filter residue collected in step (1) had a molar ratio of 1: 1.05: 0.02; and the solid powder was heated to 450 °C at a heating rate of 5 °C/min and calcined at 450 °C for 4 h, and then heated to 1,200 °C at a heating rate of 5 °C/min and calcined at 1,200 °C for 24 h.

### Example 4

A method for synthesizing a cathode material co-doped with Al and F by recycling waste ternary leftover materials was provided in this example, which was different from Example 1 in that, in step (2), a pH in the reactor was controlled at 10 and a temperature in the reactor was controlled at 30 °C; the reaction was conducted for 12 h; and the aging was conducted for 12 h.

### Example 5

A method for synthesizing a cathode material co-doped with Al and F by recycling waste ternary leftover materials was provided in this example, which was different from Example 1 in that, in step (2), a pH in the reactor was controlled at 12 and a temperature in the reactor was controlled at 70 °C; the reaction was conducted for 24 h; and the aging was conducted for 48 h.

### Example 6

A method for synthesizing an LFP cathode material co-doped with Al and F by recycling waste LFP leftover materials was provided in this example, and a specific process was as follows:
(1)6 mol/L of a sulfuric acid solution and a hydrogen peroxide solution were added to completely dissolve the waste LFP leftover materials, and a resulting mixture was filtered to obtain a filter residue (a binder PVDF) and a filtrate A; the filter residue was dried and collected; a pH of the filtrate A was adjusted to 4.5 by adding an appropriate amount of a NaOH solution, and a resulting solution was stirred for 2 h such that most of Al ions were precipitated; and a resulting mixture was filtered to obtain a filtrate B and a filter residue (Al(OH)₃), and the filter residue would be recycled. In the filtrate B, a molar ratio of aluminum ions to a transition metal element Fe was 0.01: 1.02.
(2) The filtrate B was added to a reactor, and then a temperature in the reactor was controlled at 180 °C to allow a reaction for 12 h; with the temperature, the stirring rate, and other parameters in the reactor unchanged, aging was conducted for 24 h; after the aging was completed, materials in the reactor were separated to obtain a solid; and the solid was washed repeatedly, and finally dried at 80 °C for 24 h to obtain a precursor.
(3) The precursor, lithium hydroxide monohydrate, and the PVDF collected in step (1) were mixed in a molar ratio of 1: 1.05: 0.04 and thoroughly ball-milled to be uniformly mixed to obtain a solid powder, and the solid powder was placed in a tube furnace; and the solid powder was heated to 450 °C at a heating rate of 5 °C/min and calcined at 450 °C for 4 h, and then heated to 850 °C at a heating rate of 5 °C/min and calcined at 850 °C for 12 h in a pure oxygen atmosphere ( 50 sccm, namely, 50 mL/min), then cooled with furnace, and ground to finally obtain the LFP cathode material co-doped with Al and F.

### Comparative Example 1

A method for synthesizing a ternary cathode material by recycling waste ternary leftover materials was provided in this comparative example, which was different from Example 1 in that, in step (3), no PVDF was added and a ternary cathode material doped with Al was obtained.

### Comparative Example 2

A method for synthesizing a ternary cathode material by recycling waste ternary leftover materials was provided in this comparative example, which was different from Example 1 in that, in step (1), Al ions were completely precipitated to make no aluminum doped; and in step (3), no PVDF was added, and an undoped ternary cathode material was obtained.

### Comparative Example 3

A method for synthesizing an LFP cathode material by recycling waste LFP leftover materials was provided in this comparative example, which was different from Example 6 in that, in step (1), Al ions were completely precipitated to make no aluminum doped; and in step (3), no PVDF was added, and an undoped LFP cathode material was obtained.

### Test Example

The cathode materials obtained in Examples 1 to 6 and Comparative Examples 1 to 3 each were made into a button battery according to the following method: the cathode material (as a cathode active material), a conductive agent acetylene black, and a binder PVDF were weighed according to a mass ratio of 80: 10: 10; the acetylene black and the cathode material were thoroughly dry-mixed by stirring, then the PVDF was added, a resulting mixture was thoroughly dry-mixed by stirring, and then N-methyl-2-pyrrolidone (NMP) was added to form a slurry where a solid content of the slurry was controlled at 40% and a viscosity of the slurry was controlled at 4,500 cps, which was a cathode slurry; the cathode slurry was coated on an aluminum foil, and a resulting product was rolled on a roller and punched to obtain an electrode; and the electrode was used as a positive electrode, lithium metal was used as a negative electrode, and 1.0 mol/L LiPF₆-EC+DMC (volume ratio: 1: 1) was used as an electrolytic solution to assemble the button battery in a dry glove box filled with argon.

After being laid aside for 12 h, the button battery was subjected to a rate performance test at 0.1 C, 0.5 C, 1 C, 2 C, 3 C, 5 C, and 10 C and a cycling performance test at 2 C.

The button battery was charged to 4.4 V and then disassembled; and then a positive electrode and 0.10 mL of an electrolytic solution were subjected to a differential scanning calorimetry (DSC) test, such that DSC results could simulate the actual heat release.

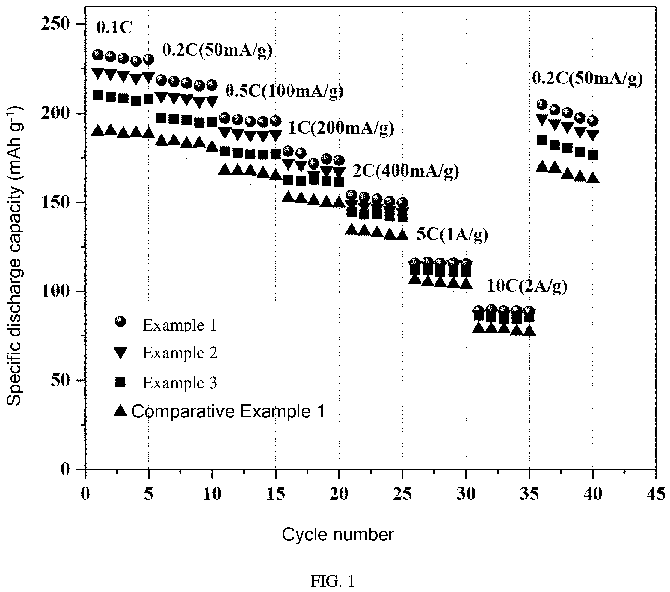

FIG. 1 shows the rate performance comparison of Examples 1, 2, and 3 with Comparative Example 1. It can be seen from the figure that, compared with the electrode doped with Al (Comparative Example 1), the samples co-doped with Al and F (Examples 1, 2, and 3) all provide higher electric capacity and better rate performance at 0.1 C and 10 C, where Example 1 shows the optimal rate performance.

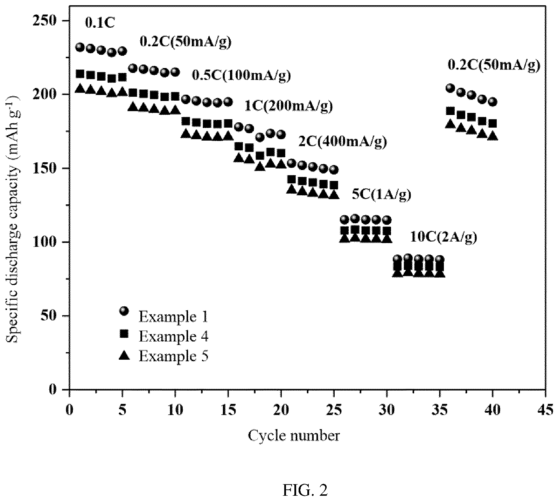

FIG. 2 shows the rate performance comparison of Examples 4 and 5 with Example 1. It can be seen from the figure that, compared with Examples 4 and 5, Example 1 provides higher electric capacity and better rate performance at 0.1 C and 10 C.

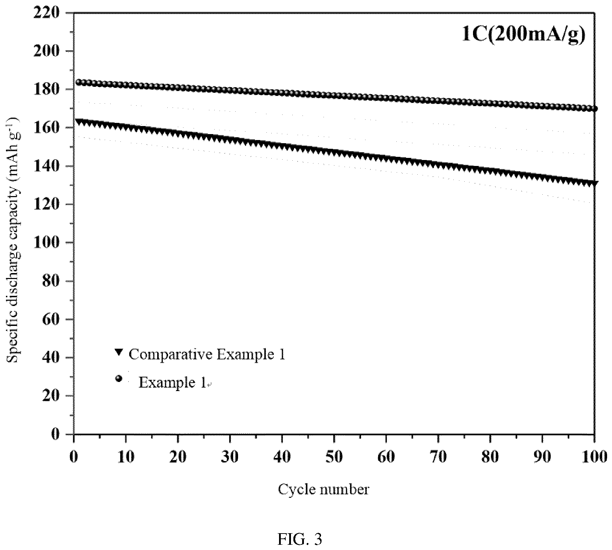

FIG. 3 shows the 1 C cycling performance comparison of Example 1 with Comparative Example 1. It can be seen from the figure that the sample co-doped with Al and F (Example 1) exhibits higher cycling performance than the sample doped with Al (Comparative Example 1).

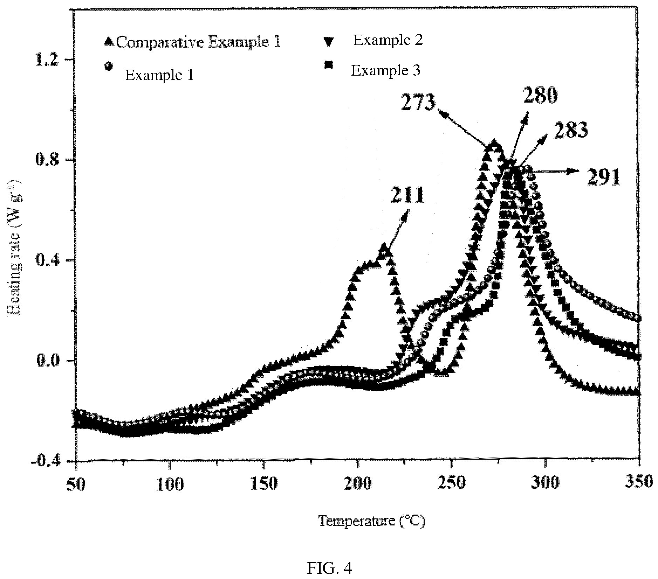

FIG. 4 shows the safety performance comparison of Examples 1, 2, and 3 with Comparative Example 1. It can be seen from the figure that the samples co-doped with Al and F (Examples 1, 2, and 3) have a higher initial exothermic temperature and a lower heat release than the sample doped with Al, indicating that the samples co-doped with Al and F have better safety performance than the sample doped with Al, where Example 1 shows the optimal safety performance.

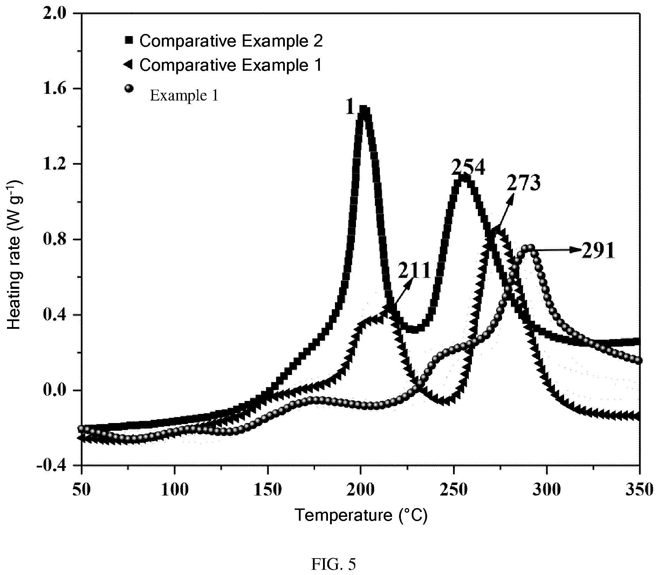

FIG. 5 shows the safety performance comparison of Example 1 with Comparative Examples 1 and 2. It can be seen from the figure that the sample co-doped with Al and F (Example 1) and the sample doped with Al (Comparative Example 1) exhibit a higher initial exothermic temperature and a lower heat release than the undoped sample (Comparative Example 2), indicating that the sample co-doped with Al and F and the sample doped with Al have better safety performance.

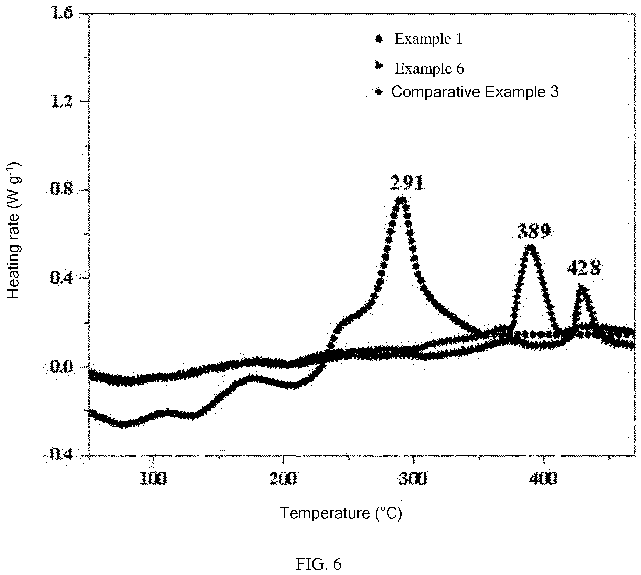

FIG. 6 shows the safety performance comparison of Examples 1 and 6 with Comparative Example 3. It can be seen from the figure that the LFP samples (Example 6 and Comparative Example 3) show better safety performance than the ternary NCM sample (Example 1), and the LFP co-doped with Al and F (Example 6) shows better safety performance than the undoped LFP (Comparative Example 3).

The present disclosure is described in detail with reference to the accompanying drawings and examples, but the present disclosure is not limited to the above examples. Within the scope of knowledge possessed by those of ordinary skill in the technical field, various changes can also be made without departing from the purpose of the present disclosure. In addition, the examples in the present disclosure and features in the examples may be combined with each other in a non-conflicting situation.

## Claims

1. A method for synthesizing a high-safety cathode material by recycling cathode leftover materials, comprising the following steps:
S1: dissolving the cathode leftover materials with an acid and a reducing agent, and conducting solid-liquid separation (SLS) to obtain a first filtrate;
S2: adjusting a pH of the first filtrate with an alkali to allow a reaction for a specified time to precipitate most of aluminum ions, and conducting SLS to obtain a second filtrate;
S3: subjecting the second filtrate to a precipitation reaction to obtain a precursor; and
S4: mixing the precursor, a lithium salt, and a fluorine source, and subjecting a resulting mixture to calcination in an oxygen atmosphere to obtain the high-safety cathode material, wherein the fluorine source is polyvinylidene difluoride.

2. The method according to claim 1, wherein the cathode leftover materials are one selected from the group consisting of waste lithium-ion battery cathode leftover materials, waste sodium-ion battery cathode leftover materials, and lithium polymer battery cathode leftover materials.

3. The method according to claim 2, wherein the waste lithium-ion battery cathode leftover materials are one selected from the group consisting of waste nickel-cobalt-manganese ternary cathode leftover materials, waste lithium iron phosphate leftover materials, waste lithium cobalt oxide leftover materials, and waste lithium manganese oxide leftover materials.

4. The method according to claim 3, wherein when the waste lithium-ion battery cathode leftover materials are waste nickel-cobalt-manganese ternary cathode leftover materials, a specific process of the precipitation reaction in step S3 is as follows: mixing an alkali and a complexing agent, and adding the second filtrate dropwise to a resulting mixture to allow a reaction for a specified time at a controlled pH and a controlled temperature; stopping to feed, conducting aging, and conducting SLS to obtain a precipitate; and washing and drying the precipitate to obtain the precursor.

5. The method according to claim 4, wherein the complexing agent is one selected from the group consisting of ammonium hydroxide and urea.

6. The method according to claim 1, wherein in step S1, the reducing agent is one selected from the group consisting of glucose, hydrogen peroxide, and formic acid.

7. The method according to claim 1, wherein in step S2, a molar ratio of the aluminum ions to other transition metal ions in the second filtrate is (0.01-0.03): (1-1.05).

8. The method according to claim 1, wherein in step S4, the precursor, the lithium salt, and the polyvinylidene difluoride have a molar ratio of (1-2): 1: (0.01-0.1).

9. The method according to claim 1, wherein in step S4, the calcination is conducted in two stages:
a first-stage calcination and a second-stage calcination; the first-stage calcination is conducted at 400 °C to 500 °C and the second-stage calcination is conducted at 900 °C to 1,200 °C; a heating rate for the first-stage calcination and the second-stage calcination is 2 °C/min to 7 °C/min; and preferably, the first-stage calcination is conducted for 3 h to 5 h and the second-stage calcination is conducted for 8 h to 24 h.

10. Use of a high-safety cathode material prepared by the method according to any one of claims 1 to 9 in an aerospace battery.
